(19) Europäisches Patentamt
European Patent Office
Office européen des brevets

(11) **EP 4 570 499 A1**

(12) **EUROPEAN PATENT APPLICATION**
published in accordance with Art. 153(4) EPC

(43) Date of publication:
**18.06.2025 Bulletin 2025/25**

(21) Application number: **23897389.5**

(22) Date of filing: **06.11.2023**

(51) International Patent Classification (IPC):
**B32B 27/20** (2006.01)     **C09D 5/29** (2006.01)
**C09D 7/41** (2018.01)     **C09D 7/61** (2018.01)
**C09D 201/00** (2006.01)

(52) Cooperative Patent Classification (CPC):
**B32B 27/20; C09D 5/29; C09D 7/41; C09D 7/61; C09D 201/00**

(86) International application number:
**PCT/JP2023/039906**

(87) International publication number:
**WO 2024/116735 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 JP 2022192295**

(71) Applicant: **MAZDA MOTOR CORPORATION**
**Hiroshima 730-8670 (JP)**

(72) Inventors:
• **YAMANE, Takakazu**
**Aki-gun, Hiroshima 730-8670 (JP)**
• **OKAMOTO, Keiichi**
**Aki-gun, Hiroshima 730-8670 (JP)**
• **MATSUMOTO, Risa**
**Aki-gun, Hiroshima 730-8670 (JP)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **MULTILAYERED COATING FILM AND COATED ARTICLE**

(57)     A multilayer coating film 12 includes: a lustrous layer 14 containing a luster material 21; and a colored layer 15 which is stacked on the lustrous layer 14, contains a colored layer reddish pigment 25, and has translucency, and when a light incident angle is 45°, and a lightness L* value and a chroma C* value of reflected light measured at a light receiving angle θ are L*(θ) and C*(θ), respectively, the multilayer coating film satisfying the following formulae (1) to (3):

$$5 \leq L^*(\theta) \leq 25 \ (10° \leq \theta \leq 25°) \quad (1)$$

$$20 \leq C^*(\theta) \leq 65 \ (10° \leq \theta \leq 25°) \quad (2)$$

$$2 \leq C^*(80°) \quad (3)$$

FIG.1

**Description**

TECHNICAL FIELD

The present disclosure relates to a multilayer coating film, and a coated article including the multilayer coating film.

BACKGROUND ART

In recent years, there has been a demand for producing a coating color producing a deep and vivid color for a coating target which is required to have a high design, such as a motor vehicle.

Patent Document 1 relates to a molding multilayer sheet useful for, e.g., a motor vehicle-related member, and describes that a design with depth is obtained. In the multilayer sheet in which a colored layer is stacked on a metallic gloss layer, the lightness L* of light penetrating the colored layer is set to 20 to 80, the gloss value of the metallic gloss layer is set to 200 or more, and the chroma C* of specular reflected light at 45 degrees is set to 150 or more. This document also indicates that aluminum flakes are added to the metallic gloss layer and perylene red is employed as a pigment in the colored layer.

Patent Document 2 indicates that FF properties are improved and a high-design metallic color is obtained in a multilayer coating film in a warm color produced by a lustrous layer which is directly or indirectly formed on a surface of a coating target and contains a luster material and a colored layer which is stacked on the lustrous layer, contains a warm color pigment, and has translucency. In the above-described multilayer coating film, the lustrous layer has a Y value of an XYZ colorimetric system calibrated with a standard white plate. When a light incident angle is 45°, $Y(10°)$ represents a Y value of reflected light measured at a light receiving angle of 10°, and $Y(25°)$ represents a Y value of reflected light measured at a light receiving angle of 25°, $Y(10°)$ is from 50 to 950 inclusive, and $Y(25°) = k \times Y(10°)$ (where k is a coefficient), k = from 0.05 to 0.35 inclusive, and the concentration C of the warm color pigment in the colored layer is from 1 mass% to 17 mass% inclusive.

Patent Document 3 indicates that FF properties are improved and a high-design metallic color is obtained in a multilayer coating film including: a lustrous layer which is formed directly or indirectly on a surface of a coating target and contains a luster material; and a colored layer which is stacked on the lustrous layer, contains a reddish coloring agent, and has translucency. With the technology of Patent Document 3, for a Y value of an XYZ colorimetric system calibrated with a standard white plate, when a light incident angle (an angle with respect to a line perpendicular to a surface of the lustrous layer) is 45°, $Y(5°)$ represents a Y value of reflected light measured at a light receiving angle (the angle of inclination to a light source side with respect to a specular reflection direction) of 5°, and $Y(15°)$ represents a Y value of reflected light measured at a light receiving angle of 15°, $Y(5°)$ is from 30 to 700 inclusive in the lustrous layer. Further, $Y(15°) = k \times Y(5°)$ (where k is a coefficient), and k is from 0.01 to 0.3 inclusive. The concentration of the reddish coloring agent in the colored layer is from 1 mass% to 17 mass% inclusive.

Patent Document 4 describes a multilayer coating film formation method which can be applied to various industrial products, particularly outer panels of motor vehicles, and which can form a coating film having high lightness and high chroma in a highlight (in the vicinity of specular reflected light), having a high chroma in a shade (in an oblique direction), having a great difference in lightness between the highlight and the shade, and having a uniform finished design. In this method, a first color clear coating film is formed on a metallic base coating film obtained by applying a metallic base paint containing a coloring pigment and a scaly luster pigment, and a second color clear coating film is further formed thereon. The first and second color clear coating films contain the same coloring pigment. The concentration of the coloring pigment per unit film thickness in the first and second color clear coating films is within a range of 30/70 to 60/35 in terms of the ratio of the former to the latter.

CITATION LIST

PATENT DOCUMENTS

Patent Document 1: Japanese Unexamined Patent Publication No. 2006-281451
Patent Document 2: International Patent Publication No. WO 2018/061215
Patent Document 3: Japanese Unexamined Patent Publication No. 2022-078780
Patent Document 4: Japanese Unexamined Patent Publication No. 2012-232236

SUMMARY

TECHNICAL PROBLEM

However, in dark color having low lightness as a whole, it is difficult to secure a lightness difference between the highlight and the shade, and it is difficult to achieve both the production of clear vivid red color and rich depth in color.

Hence, the present disclosure is intended to provide a multilayer coating film and a coated article, having dark color which can achieve both production of clear vivid red color and rich depth in color while ensuring low lightness as a whole.

SOLUTION TO THE PROBLEMS

In order to solve the foregoing problems, the multilayer coating film disclosed herein includes:

a lustrous layer that is formed directly or indirectly on a surface of a coating target and contains a luster material; and a colored layer that is stacked on the lustrous layer, contains a coloring agent, and has translucency, and

when a light incident angle is 45°, and a lightness L* value and a chroma C* value of reflected light measured at a light receiving angle $\theta$ are L*($\theta$) and C*($\theta$), respectively, the multilayer coating film satisfying the following formulae (1) to (3):

$$5 \leq L^*(\theta) \leq 25 \ (10° \leq \theta \leq 25°) \quad (1)$$

$$20 \leq C^*(\theta) \leq 65 \ (10° \leq \theta \leq 25°) \quad (2)$$

$$2 \leq C^*(80°) \quad (3)$$

The multilayer coating film having dark color, i.e., a hue with low lightness as a whole is configured such that the highlight ($10° \leq \theta \leq 25°$) has low lightness and high chroma as represented by the formulae (1) and (2). This makes it possible to produce fine vivid red color with high clearness even in the dark hue as a whole. As represented by the formula (3), the shade ($\theta = 80°$) ensures certain chroma while the lightness is significantly low, thereby making it possible to achieve rich depth in color while maintaining chroma.

It is preferable that when $\theta$ at which L*($\theta$) ($10° \leq \theta \leq 25°$) of the multilayer coating film is an upper limit value is $\theta1$, and $\theta$ at which L*($\theta$) ($10° \leq \theta \leq 25°$) of the multilayer coating film is a lower limit value is $\theta2$,
a coefficient k satisfying C*($\theta1$) = k $\times$ C*($\theta2$) for the multilayer coating film is from 0.03 to 0.5 inclusive.

For the C*($\theta1$) and the C*($\theta2$) corresponding to the upper limit value and the lower limit value of the lightness L* values in the highlight, respectively, when k satisfies the numerical range, production of red color with high clearness can be more effectively ensured in the highlight.

It is preferable that when $\theta$ at which L*($\theta$) ($10° \leq \theta \leq 25°$) of the multilayer coating film is the upper limit value is $\theta1$, and
a difference $\Delta$C* = C*($\theta1$) - C*(80°) between C*($\theta1$) and C*(80°) is defined as a highlight/shade chroma contrast index, the highlight/shade chroma contrast index is 50 or higher.

The higher the highlight/shade chroma contrast index is, the more the contrast in chroma between highlight and shade can be secured while the lightness is low as a whole. This makes it possible to achieve both production of clear vivid red color and rich depth in color.

Y values of the multilayer coating film are obtained by continuous measurement in a direction parallel to a surface of the multilayer coating film at a light receiving angle $\theta$ of 45°, and an average of standard deviations of the Y values calculated for each predetermined measurement distance in change of the Y values is defined as a graininess index of the multilayer coating film, and the graininess index is preferably from 0.09 to 0.12 inclusive.

When the graininess index is within the above numerical range, vivid deep hue can be obtained in dark colors while the lightness is low.

Particularly when the highlight/shade chroma contrast index and graininess index both satisfy the above numerical ranges in the multilayer coating film with dark color, production of clear vivid red color and rich depth in color can be both achieved more effectively while ensuring low lightness as a whole.

It is preferable that the lustrous layer satisfies the following formulae (4) to (6).

$$11 \leq L^*(\theta) \leq 70 \ (10° \leq \theta \leq 25°) \quad (4)$$

$$6 \leq C^{*}(\theta) \leq 30 \ (10° \leq \theta \leq 25°) \qquad (5)$$

$$0.5 \leq C^{*}(80°) \qquad (6)$$

When the L* value and C* value of the lustrous layer containing a luster material satisfy the formulae (4) to (6), the above numerical ranges of the L* value and C* value in the multilayer coating film are easily achieved.

In one embodiment, the lustrous layer contains a first coloring agent and a second coloring agent,

the first coloring agent is a blackish coloring agent, and
the second coloring agent is a coloring agent of color other than blackish color.

If the light diffused and reflected on the fine asperities or edges of the surface of the luster material or a base (e.g., electrodeposition coating film) penetrates the colored layer, the amount of light in the shade direction increases, and the lightness of the shade increases. If the lightness of the shade has increased, the whiteness of the shade increases, which causes the red color in the highlight to be blurred.

In this configuration, since the blackish coloring agent is contained in the lustrous layer, most of incident light penetrating a gap among particles of the luster material in the lustrous layer is absorbed and/or shielded by the blackish coloring agent, and therefore, almost no light reflection occurs on the base. The light diffused and reflected on the fine asperities or edges of the surface of the luster material is absorbed and/or shielded by the blackish coloring agent, and the lightness of the shade decreases accordingly.

Examples of the blackish coloring agent in the lustrous layer include a blackish pigment excellent in weather resistance and/or a blackish dye excellent in clearness. From the viewpoint of ensuring a sufficient weather resistance of the multilayer coating film, the blackish pigment can be employed. Examples of the blackish pigment include carbon black, chromium oxide, iron oxide, manganese oxide, and a black indigoid pigment.

The lustrous layer further contain, as a coloring agent, a coloring agent in color different from blackish color, such as a reddish coloring agent. This makes it possible to reduce light scattering and ensure the chroma in the shade, thereby providing rich depth in color.

It is preferable that a solid content concentration of the first coloring agent in the lustrous layer is from 1 mass% to 20 mass% inclusive.

If the solid content concentration of the first coloring agent is too low, the light absorbing function and the light hiding power might not be sufficiently obtained. On the other hand, in the case where the solid content concentration of the first coloring agent is too high, when the first coloring agent is, for example, a pigment, a structure formed of aggregated primary particles is likely to be in a mechanically entangled state, and light scattering increases. Thus, clearness may be degraded, and the lightness of the shade may increase. Thus, the solid content concentration of the first coloring agent in the lustrous layer is set within the above-described range, and it is advantageous in decreasing the lightness of the shade.

It is preferable that a solid content concentration of the second coloring agent in the lustrous layer is from 1 mass% to 20 mass% inclusive.

This makes it possible to sufficiently reduce light scattering and sufficiently ensure the chroma in the shade, thereby providing rich depth in color.

It is preferable that the first coloring agent is a blackish pigment, and the second coloring agent is a reddish pigment.

This makes it possible to reduce light scattering and achieve the hue with red vividness retained even in the hue with low lightness as a whole.

It is preferable that the coloring agent contained in the colored layer is a reddish pigment, and
a solid content concentration of the reddish pigment in the colored layer is from 1 mass% to 17 mass% inclusive.

When the colored layer contains the reddish pigment at the above the solid content concentration, the chroma of red can be secured even in the hue with low lightness as a whole, and clear vivid red color can be achieved.

The coated article including the multilayer coating film provided on a coating target is, for example, a body of a motor vehicle. The coated article may also be a body of a motorcycle or bodies of other vehicles, or may be other metal products or plastic products.

ADVANTAGES OF THE INVENTION

As described above, according to the present disclosure, the multilayer coating film having dark color, i.e., a hue with low lightness as a whole is configured such that the highlight ($10° \leq \theta \leq 25°$) has low lightness and high chroma as represented by the formulae (1) and (2). This makes it possible to develop fine red color with high clearness even in the dark hue as a whole. As represented by the formula (3), the shade ($\theta = 80°$) ensures certain chroma while the lightness is significantly low, thereby making it possible to achieve rich depth in color while maintaining chroma.

BRIEF DESCRIPTION OF DRAWINGS

FIG. 1 is a cross-sectional view schematically illustrating a multilayer coating film.
FIG. 2 illustrates how to measure L* value of the multilayer coating film.
FIG. 3, (a) illustrates how to measure the graininess index of a multilayer coating film, and (b) is a graph of example measurement results of the graininess index of the multilayer coating film.
FIG. 4, (a) is a graph illustrating a relationship between L* value and a light receiving angle and (b) is a graph illustrating a relationship between C* value and the light receiving angle in multilayer coating films of Examples and Comparative Examples.
FIG. 5 is a graph illustrating a relationship between highlight/shade chroma contrast index and graininess index in the multilayer coating films of Examples and Comparative Examples.
FIG. 6 is a graph illustrating a relationship between PWC and average particle size of blackish pigment in a lustrous layer.

DESCRIPTION OF EMBODIMENTS

Embodiments of the present disclosure will now be described with reference to the drawings. The following description of the embodiments is merely an example in nature, and is not intended to limit the scope, applications, or use of the present disclosure.

(First Embodiment)

<Terminology>

In this specification, a proportion (mass%) of the mass of each of all solid contents (all solid contents including a pigment, a luster material, a resin, an additive, and the like except for a solvent and water) contained in a paint composition relative to the total mass of the all solid contents may be referred to as a "solid content concentration" or "PWC."

<Example Configuration of Multilayer Coating Film>

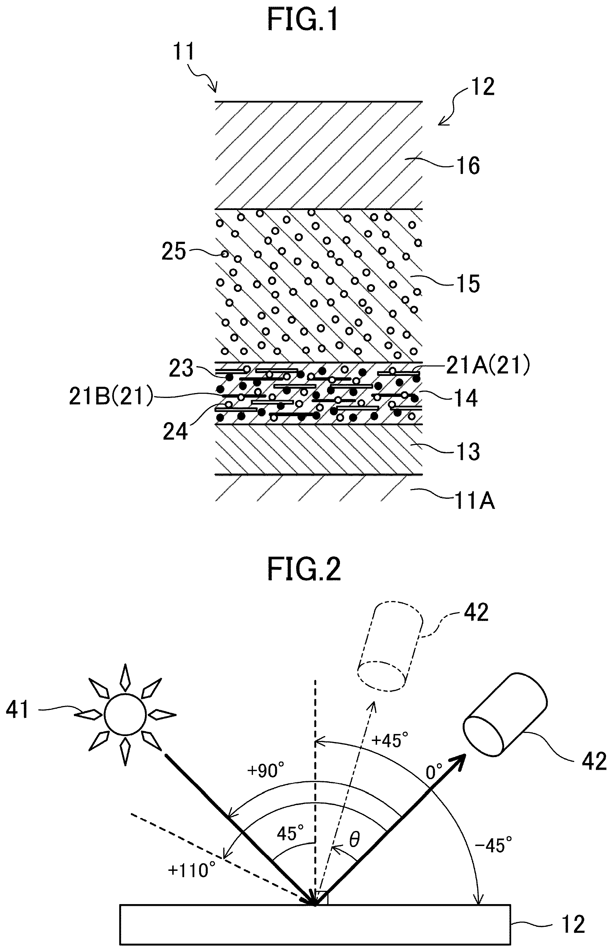

Hereinafter, exemplary configurations of the multilayer coating film and the coated article will be described.
As illustrated in FIG. 1, a vehicle body 11 (coated article) of a motor vehicle of the present embodiment includes a multilayer coating film 12 provided on a surface of a steel plate 11A (coating target) via an electrodeposition coating film 13. The multilayer coating film 12 is formed in such a manner that a lustrous layer 14, a colored layer 15 having translucency, and a transparent clear layer 16 are layered in this order. The electrodeposition coating film 13 is formed in advance on the surface of the steel plate 11A by cationic electrodeposition coating.
The lustrous layer 14 contains a resin component which is a base material, a luster material 21, a blackish pigment 23 (a first coloring agent, a blackish coloring agent), and a lustrous layer reddish pigment 24 (a second coloring agent, a coloring agent of color other than blackish color).
The colored layer 15 contains a resin component which is a base material, and a colored layer reddish pigment 25 (coloring agent).
Although not limited thereto, the resin components to be employed for the lustrous layer 14 and the colored layer 15 may be, for example, any of acrylic resin, polyester resin, urethane resin, and melamine resin alone, or combination of them. The resin component to be employed for the transparent clear layer 16 may be, for example, carboxylic acid group-containing acrylic resin, a combination of polyester resin and epoxy-containing acrylic resin, and a combination of acrylic resin and/or polyester resin and polyisocyanate.
The lustrous layer 14 and the colored layer 15 may further contain an additive such as a UV shielding material, a viscous material, a thickening material, a pigment dispersant, or a surface adjustment material, as necessary. Particularly, from the viewpoint of the light resistance of the multilayer coating film 12, the multilayer coating film 12 preferably contains an UV shielding material. The UV shielding material to be employed may be an organic compound-based UV absorber or an inorganic compound-based UV scattering agent (hereinafter also referred to as an "inorganic UVA"), or the like, and among them, nanoparticles of metal oxide such as iron oxide are preferably employed.
The lustrous layer 14 preferably has a thickness from 6 $\mu$m to 15 $\mu$m inclusive, more preferably from 7 $\mu$m to 13 $\mu$m inclusive, and the colored layer 15 preferably has a thickness from 8 $\mu$m to 15 $\mu$m inclusive.

The surface roughness Ra of the electrodeposition coating film 13 is preferably 2.0 μm or less, more preferably 1.0 μm or less. Accordingly, the orientation of the luster material 21 of the lustrous layer 14 is improved.

<Lustrous Layer>

[Luster Material]

The lustrous layer 14 contains, as a luster material 21, a high-reflection flakes 21A and low-reflection flakes 21B having a lower visible light reflectance than the high-reflection flakes 21A.

- High-Reflection Flakes

As the high-reflection flakes 21A contained in the lustrous layer 14, metal flakes or the like having high visible light reflectance may be employed. **In** the present embodiment, aluminum flakes are employed as the high-reflection flakes 21A.

The aluminum flakes preferably have a visible light reflectance of 90% or more in view of obtaining a sufficient lightness and chroma of highlight. Accordingly, the amount of light in a highlight direction can be sufficiently ensured, and sufficient lightness and chroma of the highlight can be obtained.

It is preferable that these aluminum flakes employed specifically have an average particle size from 5 μm to 30 μm inclusive, preferably from 10 μm to 15 μm inclusive, and have an average thickness from 10 nm to 500 nm inclusive. Particularly, the average thickness is preferably from 10 nm to 50 nm inclusive in the case of evaporated aluminum flakes and from 100 nm to 500 nm inclusive in the case of thin aluminum flakes.

In this specification, the "average particle sizes" of the luster material 21, various pigments, the inorganic UVA made of nanoparticles, and the like may be determined by determining D50, which is a value of the particle size at 50% in particle size distribution measured by, for example, a laser diffraction type particle size distribution measurement device. The average particle size is preferably a number-average particle size.

As for the average thickness of the luster material 21, the thicknesses of multiple particles (e.g., 50 particles) of the luster material 21 are measured through, for example, observation with a scanning electron microscope, and the average thereof is taken as the average thickness.

If the average particle size is too small, reflection properties may be degraded. If the average particle size is too large, excellent reflection properties are exhibited, but the appearance may be too granular. Diffuse reflection on the edge of the aluminum flake is higher as the thickness of the flake increases, but since the thickness is small as described above, the diffuse reflection is weak. This is advantageous in reducing the lightness of shade.

The aspect ratio (average particle size/average thickness) of the aluminum flake is preferably from 30 to 300 inclusive.

The aluminum flakes preferably have a surface roughness Ra of 50 nm or less. Particularly, the surface roughness Ra is preferably 7 nm or less in the case of evaporated aluminum flakes and 50 nm or less in the case of smooth aluminum flakes. Accordingly, the diffuse reflection due to fine asperities of the surface of the aluminum flakes can be reduced, and therefore, the lightness of the shade can be reduced.

In order to increase the lightness of the highlight, the luster material 21 is oriented substantially parallel with the surface of the lustrous layer 14 (such that the average orientation angle of the luster material 21 with respect to the surface of the lustrous layer 14 is 1.2 degrees or less). For example, after a paint containing the luster material 21, the blackish pigment 23, the lustrous layer reddish pigment 24, and the like is applied on top of the electrodeposition coating film 13, a solvent included in the coating film is evaporated by stoving, whereby the coating film shrinks in volume and becomes thin. By utilizing this fact, the luster material 21 is arranged at the average orientation angle of 1.2 degrees or less. The average orientation angle of the luster material 21 is obtained as follows: the inclinations of multiple particles (for example, 50 particles) of the luster material 21 included in a single visual field with respect to the surface of the lustrous layer 14 are calculated from 3D shape data (xyz coordinates) measured on the surface of the lustrous layer 14 with a laser microscope (VK-X1000 manufactured by KEYENCE CORPORATION), and are averaged.

There are two types of aluminum flakes, i.e., a leafing type and a non-leafing type, and either type may be used. However, the non-leafing type aluminum flakes are preferably used.

The leafing type aluminum flakes have a low surface tension. Thus, in the case where a paint containing the leafing type aluminum flakes is applied, the aluminum flakes float on the surface of the lustrous layer 14, and are oriented parallel with the surface. When the aluminum flakes float on the surface of the lustrous layer 14, the amount of reflected light increases and metallic texture is enhanced, but strong flat gloss, such as specular reflection, is obtained. In addition, in the case of the leafing type aluminum flakes, a surface area is small, and the amount of resin component on the surface of the lustrous layer 14 is decreased. Thus, there is a problem in which adhesiveness between the lustrous layer 14 and the colored layer 15 is degraded and peeling easily occurs due to an external factor such as chipping.

On the other hand, the non-leafing type aluminum flakes have a high surface tension. Thus, in the case where a paint containing the non-leafing type aluminum flakes is applied, the aluminum flakes are oriented parallel with the surface of the lustrous layer 14 and are irregularly dispersed in a film thickness direction, as illustrated in, e.g., FIG. 1. Accordingly, the amount of reflected light changes in accordance with the positions of the aluminum flakes in the film thickness direction, and therefore, three-dimensional metallic gloss can be obtained and a high-design coating color can be obtained. In addition, in the case of the non-leafing type aluminum flakes, the amount of resin component on the surface of the lustrous layer 14 can be sufficiently ensured, and therefore, sufficient adhesiveness between the lustrous layer 14 and the colored layer 15 can be ensured.

- Low-Reflection Flakes

Although the high-reflection flakes 21A such as aluminum flakes are effective in increasing the lightness of the highlight, not only the diffuse reflection due to fine asperities on the flake surfaces and the diffuse reflection at the flake edges, but also diffuse reflection on the electrodeposition coating film 13 occur. Thus, the lightness of the highlight and the lightness of the shade cannot be adjusted to the desired ones by only adjusting the concentration of the high-reflection flakes 21A. Therefore, in this embodiment, the high-reflection flakes 21A and the low-reflection flakes 21B are used in combination to use the light absorbing function and the light hiding power of the low-reflection flakes 21B, thereby adjusting the reflection properties of the multilayer coating film.

In the case of using both the high-reflection and low-reflection flakes 21A, 21B, most of the incident light penetrating the gap among the high reflection flakes 21A is shielded by contacting the low reflection flakes 21B, and therefore, almost no light reflection occurs on the base (electrodeposition coating film 13). Then, the light diffused and reflected on the high-reflection flakes 21A is shielded or absorbed by the low-reflection flakes 21B, and the lightness of the shade is decreased accordingly.

The low-reflection flakes 21B have a visible light reflectance of preferably 3/4 or less, more preferably 1/2 or less, of that of the high-reflection flakes 21A. The average particle size of the low-reflection flakes 21B only needs to be from 5 $\mu$m to 20 $\mu$m inclusive, and in view of decreasing diffuse reflection, the average thickness is preferably from 10 nm to 100 nm inclusive, and the surface roughness Ra is preferably 100 nm or less. Diffuse reflection on the edges of the flake-like luster material is higher as the thickness of the flakes increase, but since the thickness of the low-reflection flakes 21B is small, the diffuse reflection is weak. This is advantageous in reducing the lightness of shade.

Specific examples of the low-reflection flakes 21B include flakes having a visible light reflectance of 3/4 of that of aluminum flakes and represented by chromium flakes, flakes having a visible light reflectance of 1/2 of that of aluminum flakes and represented by stainless steel flakes, flakes having a visible light reflectance of 1/4 of that of aluminum flakes and represented by chromium oxide flakes, and flakes having a visible light reflectance of 1/18 of that of aluminum flakes and represented by plate-like iron oxide ($\alpha$-Fe$_2$O$_3$) flakes or carbon flakes. The low-reflection flakes 21B employed are preferably chromium oxide flakes.

In order to adjust the reflection properties, only high-reflection flakes 21A may be employed as a luster material of the lustrous layer 14, and a black base layer or other dark base layer (absorbing layer) absorbing light may be provided between the lustrous layer 14 and the electrodeposition coating film 13. That is, this is a method in which the PWC of the high-reflection flakes 21A in the lustrous layer 14 is adjusted and light having penetrated the gap among the high-reflection flakes 21A is absorbed by the dark base layer. In this method, it is necessary to coat the dark base layer, but it is possible to adjust the reflection properties.

- Area Ratio of Luster Material

When the luster material 21 is projected onto the bottom surface of the lustrous layer 14, the percentage (also referred to as an "area ratio" in this specification) of the projected area of the luster material 21 on the bottom surface is preferably from 3% to 70% inclusive, more preferably from 20% to 50% inclusive, per unit area.

If the area ratio of the luster material 21 is too low, the amount of light reflected by the luster material 21 is insufficient, and sufficient chroma of the highlight cannot be obtained. On the other hand, if the area ratio of the luster material 21 is too high, the amount of luster material 21 is high, and thus, influence of the diffuse reflection due to the fine asperities and edges of the surface of the luster material 21 is high. Accordingly, the lightness of the highlight and the lightness of the shade increase, and the strength and weather resistance of the lustrous layer 14 decrease. If the area ratio of the luster material 21 is set within the above-described range, the highlight/shade chroma contrast can be enhanced, and sufficient strength and weather resistance can be obtained while sufficient darkness of the highlight and shade is ensured.

The area ratio of the luster material 21 per unit area is obtained, for example, in such a manner that the lustrous layer 14 is observed from the surface thereof under magnification with a microscope and the area ratios of the luster material 21 in multiple visual fields (for example, 10 visual fields) are calculated by image processing and are averaged.

The area ratio of the luster material 21 as described above can be obtained, for example, by setting the PWC of the luster material 21 in the lustrous layer 14 to preferably from 1 mass% to 17 mass% inclusive, more preferably from 5 mass% to 12 mass% inclusive. If the PWC of the luster material 21 is less than 1 mass%, a sufficient area ratio of the luster material 21 cannot be obtained. If the PWC of the luster material 21 exceeds 17 mass%, the area ratio of the luster material 21 is too high.

If the high-reflection flakes 21A and the low-reflection flakes 21B are employed as the luster material 21, the proportion of the low-reflection flakes 21B in the luster material 21 is set to preferably 10 mass% or less.

[Blackish Pigment]

Although the flake-like luster material 21 is effective in increasing the lightness of the highlight, not only the diffuse reflection due to the fine asperities on the flake surface and the diffuse reflection at the flake edges, but also diffuse reflection on a base (the electrodeposition coating film 13 in the present embodiment) occur. If such light diffused and reflected penetrates the colored layer 15, the amount of light in a shade direction increases, and the lightness of the shade increases. If the lightness of the shade has increased, the whiteness of the shade increases, which causes the red color in the highlight to be blurred, the entire lightness increases, and the highlight/shade chroma contrast decreases. Thus, it is preferable that the blackish pigment 23 is contained in the lustrous layer 14 and that the reflection properties of the shade are adjusted using the light absorbing function and light hiding power of the blackish pigment 23.

Most of incident light penetrating a gap among the particles of the luster material 21 is absorbed and/or shielded by the blackish pigment 23, and therefore, almost no diffuse reflection occurs on the base (electrodeposition coating film 13). The light diffused and reflected by the fine asperities or edges of the luster material 21 is absorbed and/or shielded by the blackish pigment 23, and the lightness of the shade is decreased accordingly.

As the blackish pigment 23 contained in the lustrous layer 14, carbon black having excellent weather resistance, for example, may be employed although the blackish pigment 23 is not limited thereto.

The PWC of the blackish pigment 23 in the lustrous layer 14 is from 1 mass% to 20 mass% inclusive, preferably from 3 mass% to 19 mass% inclusive, more preferably from 5 mass% to 15 mass% inclusive. If the PWC of the blackish pigment 23 is too low, the light absorbing function and the light hiding power might not be sufficiently obtained. On the other hand, if the PWC of the blackish pigment 23 is too high, a structure formed of aggregated primary particles is likely to be in a mechanically entangled state, and light scattering increases. Thus, clearness may be degraded, and the lightness of the shade may increase. Thus, the PWC of the blackish pigment 23 in the lustrous layer 14 is set within the above-described range, and it is thus advantageous in decreasing the lightness of the shade.

The average particle size of the blackish pigment 23 is preferably from 10 nm to 200 nm inclusive, more preferably from 50 nm to 160 nm inclusive. Since the average particle size of 200 nm or less is 1/2 of the lower wavelength limit (a wavelength of 400 nm) of visible light, light scattering due to particles of the blackish pigment 23 can be reduced, and darkness of the shade can be ensured. If the average particle size of the blackish pigment 23 is less than 10 nm, it becomes difficult to ensure sufficiently low lightness. If the average particle size of the blackish pigment 23 exceeds 200 nm, light scattering due to particles of the blackish pigment 23 cannot be sufficiently reduced, and it becomes difficult to ensure sufficient darkness of the shade.

In order to adjust reflection properties of light, a black base layer or other dark base layer (absorbing layer) absorbing light may be provided between the lustrous layer 14 and the electrodeposition coating film 13. That is, this is a method in which light having penetrated the gap among the particles of the luster material 21 in the lustrous layer 14 is absorbed by the dark base layer. In this method, it is necessary to coat the dark base layer, but it is possible to adjust the reflection properties.

[Lustrous Layer Reddish Pigment]

The lustrous layer 14 preferably contains a coloring agent of color other than blackish color, preferably a coloring agent of color similar to the coloring agent contained in the colored layer 15, for example, a reddish coloring agent. This makes it possible to reduce light scattering, ensure the chroma of highlight and shade, particularly the chroma of shade, thereby achieving the hue with red vividness and deepness in color retained even in the hue with low lightness as a whole.

In this embodiment, the lustrous layer reddish pigment 24 is contained as a reddish coloring agent. The lustrous layer reddish pigment 24 to be used may include, for example, specifically, an organic pigment such as perylene red, dibromoanthanthrone red, azo red, anthraquinone red, quinacridone red, or diketopyrrolopyrrole, and perylene red, having excellent weather resistance, is particularly preferably used.

The average particle size of the lustrous layer reddish pigment 24 is from 10 nm to 200 nm inclusive, preferably from 50 nm to 200 nm inclusive.

Since the average particle size of the lustrous layer reddish pigment 24 is 200 nm or less, there is no geometric optical scattering or Mie scattering due to the pigment particles. Since the average particle size is 10 nm or more, Rayleigh scattering is also avoided. Thus, it is advantageous in producing clear vivid red color and achieving rich depth in color.

The PWC of the lustrous layer reddish pigment 24 in the lustrous layer 14 is from 1 mass% to 20 mass% inclusive, preferably from 2 mass% to 10 mass% inclusive, more preferably from 4 mass% to 8 mass% inclusive.

If the PWC of the lustrous layer reddish pigment 24 in the lustrous layer 14 is less than 1 mass%, the color of red cannot be sufficiently produced in the highlight. If the PWC of the lustrous layer reddish pigment 24 exceeds 20 mass%, an effect of the pigment particles absorbing and/or shielding the reflected light increases and the lightness and chroma of the highlight decrease, and the lightness of the shade increases due to an effect of the pigment particles scattering light. Thus, the highlight/shade chroma contrast decreases.

[Entire Coloring Agent]

The entire lightness in the multilayer coating film of dark color needs to be low. In this respect, it is effective that the lustrous layer 14 contains a blackish pigment 23. Further, the reddish pigment contained not only in colored layer 15 but also in the lustrous layer 14 is very advantageous in sufficiently ensuring the highlight/shade chroma contrast between highlight and shade, achieving both production of clear vivid red color and rich depth in color, while the lightness is low as a whole.

In other words, it is preferable that the lustrous layer 14 contains both the blackish pigment 23 and the lustrous layer reddish pigment 24.

The PWC of all coloring agents contained in the lustrous layer 14, i.e., the total of the blackish pigment 23 and the lustrous layer reddish pigment 24 is preferably from 1 mass% to 26 mass% inclusive, more preferably from 5 mass% to 25 mass% inclusive.

The proportion of the lustrous layer reddish pigment 24 relative to the total of the blackish pigment 23 and the lustrous layer reddish pigment 24 is preferably 80 mass% or less, more preferably from 5 mass% to 50 mass% inclusive.

With such a configuration, production of clear vivid red color and rich depth in color can be both achieved while ensuring low lightness as a whole.

<Colored Layer>

<Colored Layer Reddish Pigment>

The colored layer reddish pigment 25 to be used may include, for example, an organic pigment such as perylene red, dibromoanthanthrone red, azo red, anthraquinone red, quinacridone red, or diketopyrrolopyrrole, and perylene red, having excellent weather resistance, is particularly preferably used.

The average particle size of the colored layer reddish pigment 25 is preferably from 2 nm to 160 nm inclusive, more preferably from 2 nm to 30 nm inclusive.

Since the average particle size of the reddish pigment is 160 nm or less, there is no geometric optical scattering or Mie scattering due to the pigment particles. Since the average particle size is 2 nm or more, Rayleigh scattering is also avoided. Thus, it is advantageous in producing clear vivid red color. In addition, the average particle size is small, and therefore, if the same PWC is applied, the frequency of light contacting pigment particles and being absorbed by the pigment particles when the light penetrates the colored layer is higher than that in the case where the pigment particle size is large. Thus, the light is more greatly attenuated. When the light attenuation increases, the amount of light penetrating the colored layer 15 decreases, and the overall chroma decreases. However, since the amount of light in the highlight direction is originally high, influence of the light attenuation on the chroma is small. On the other hand, since the amount of light in the shade direction is originally small, the influence of the light attenuation on the chroma is great. If the particle size of the pigment particles is reduced, the highlight/shade chroma contrast is improved. This is advantageous in achieving both production of clear vivid red color and rich depth in color.

The PWC of the colored layer reddish pigment 25 in the colored layer 15 is from 1 mass% to 17 mass% inclusive, preferably from 4 mass% to 10 mass% inclusive.

If the PWC of the colored layer reddish pigment 25 in the colored layer 15 is less than 1 mass%, the color of red cannot be sufficiently produced in the highlight. If the PWC of the colored layer reddish pigment 25 exceeds 17 mass%, an effect of the pigment particles absorbing and/or shielding the reflected light increases and the chroma of the highlight decreases, and the lightness and the chroma of the shade increases due to an effect of the pigment particles scattering light. Thus, the highlight/shade chroma contrast index decreases.

<Optical Properties of Multilayer Coating Film>

[L* Value and C* Value]

An L* value and a C* value are the lightness and the chroma of an L*a*b* color colorimetric system, respectively. The C* value can be calculated by C* = $\sqrt{(a^*)^2 + (b^*)^2}$ using values of a* and b*.

FIG. 2 illustrates how to measure the L* value of the multilayer coating film 12. The light incident angle of a light source 41 (an angle with respect to a light perpendicular to the surface of the target object, i.e., the multilayer coating film 12 herein) is 45°. The light receiving angle θ (the angle of inclination to a light source side with respect to a specular reflection direction) of a sensor 42 is 0°. A three-dimensional gonio-spectrophotometric color measurement system GCMS-4 from Murakami Color Research Laboratory was used to measure the values.

When a light incident angle is 45°, and a L* value and a C* value of reflected light measured at a light receiving angle θ are L*(θ) and C*(θ), respectively, the multilayer coating film 12 satisfies the following formulae (1) to (3):

$$5 \le L^*(\theta) \le 25 \ (10° \le \theta \le 25°) \quad (1)$$

$$20 \le C^*(\theta) \le 65 \ (10° \le \theta \le 25°) \quad (2)$$

$$2 \le C^*(80°) \quad (3).$$

In other words, L*(θ) at $10° \le \theta \le 25°$, which is highlight, is from 5 to 25 inclusive, preferably from 6 to 25 inclusive, more preferably from 8 to 24 inclusive, particularly preferably from 8.77 to 23.41 inclusive. Further, C*(θ) at $10° \le \theta \le 25°$ is from 20 to 65 inclusive, preferably from 21 to 65 inclusive, more preferably from 23 to 63 inclusive, particularly preferably from 31.2 to 62.68 inclusive.

A light receiving angle of 90° is difficult to be measured because the reflected light overlaps the incident light. Therefore, C*(80°) at a light receiving angle of 80°, which is in vicinity of the light receiving angle of 90°, is the C* value of the shade. C*(80°) is 2 or more, preferably from 2.2 to 10 inclusive, more preferably from 3 to 8 inclusive, particularly preferably from 4 to 5 inclusive.

In a multilayer coating film 12 in dark red like a color of aged wine, i.e., a red hue with low lightness as a whole, the highlight ($10° \le \theta \le 25°$) having low lightness and high chroma as represented by the formulae (1) and (2) makes it possible to produce fine vivid red color with high clearness even in the dark hue as a whole. As represented by the formula (3), the shade (θ = 80°) ensures certain chroma while the lightness is significantly low, thereby making it possible to achieve rich depth in color while maintaining chroma.

In view of ensuring sufficiently low lightness, in the dark color multilayer coating film, the lightness L*(80°) of shade (θ=80°) is preferably 5 or less, more preferably 4 or less.

[k]

In the dark color multilayer coating film 12, the lightness of highlight is low, but in view of obtaining clear vivid red color while the lightness is low, the slope of chroma in highlight is preferably with a predetermined numerical range.

Specifically, θ at which L*(θ) of the multilayer coating film 12 at highlight ($10° \le \theta \le 25°$) is the upper limit value (e.g., 25, preferably 24, more preferably 23.41) is θ1, and θ at which L*(θ) of the multilayer coating film 12 at highlight ($10° \le \theta \le 25°$) is the lower limit value (e.g., 5, preferably 8, more preferably 8.77) is θ2.

For the multilayer coating film 12, when a coefficient k satisfying C*(θ1) = k×C*(θ2) is defined as the slope of the chroma in highlight, k is preferably from 0.03 to 0.5 inclusive, more preferably from 0.1 to 0.5 inclusive.

For the C*(θ1) and the C*(θ2) corresponding to the upper limit value and the lower limit value of the lightness L* values in the highlight, respectively, when k satisfies the numerical range, production of vivid red color with high clearness can be more effectively ensured in the highlight.

[Highlight/Shade Chroma Contrast Index]

In the multilayer coating film in dark color, the lightness of the highlight and the lightness of the shade are both low. Further, in order to achieve both production of clear vivid red color in low lightness and rich depth in color, it is effective to ensure contrast in chroma between highlight and shade. The contrast in chroma between highlight and shade is referred to as the "highlight/shade chroma contrast" in this specification.

As a representative value of the chroma C* value in highlight of the multilayer coating film 12, the chroma C*(θ1) at the light receiving angle θ1 was employed, and the difference ΔC* = C*(θ1) - C*(80°) from the chroma C*(80°) of the shade, i.e., the difference in chroma between the highlight and the shade was used as a highlight/shade chroma contrast index (also referred to as "C*FF" in this specification), which is an index indicating the highlight/shade chroma contrast.

The higher the highlight/shade chroma contrast index is, the more the contrast in chroma between highlight and shade can be secured while the lightness is low as a whole. This makes it possible to achieve both production of clear vivid red color and rich depth in color.

Specifically, the highlight/shade chroma contrast index is preferably 50 or more, more preferably from 50 to 60 inclusive.

[Graininess Index]

The Y value of the XYZ colorimetric system is Y of tristimulus values X, Y, Z defined by the following equations in the CIEXYZ color space (https://ja.wikipedia.org/wiki/CIE_1931_%E8%89%B2%E7%A9%BA%E9%96%93), and is a stimulus value indicating a luminance (luminous reflectance).

[Equation 1]

$$X = \int_{380}^{780} L_{e,\Omega,\lambda}(\lambda)\, \bar{x}(\lambda)\, d\lambda,$$

$$Y = \int_{380}^{780} L_{e,\Omega,\lambda}(\lambda)\, \bar{y}(\lambda)\, d\lambda,$$

$$Z = \int_{380}^{780} L_{e,\Omega,\lambda}(\lambda)\, \bar{z}(\lambda)\, d\lambda.$$

Note that x($\lambda$), y($\lambda$), and z($\lambda$) (upper bars thereof are omitted) are CIE color-matching functions, and Le, $\Omega$, and $\lambda$ are the spectral radiances of colors measured by a colorimetric observer.

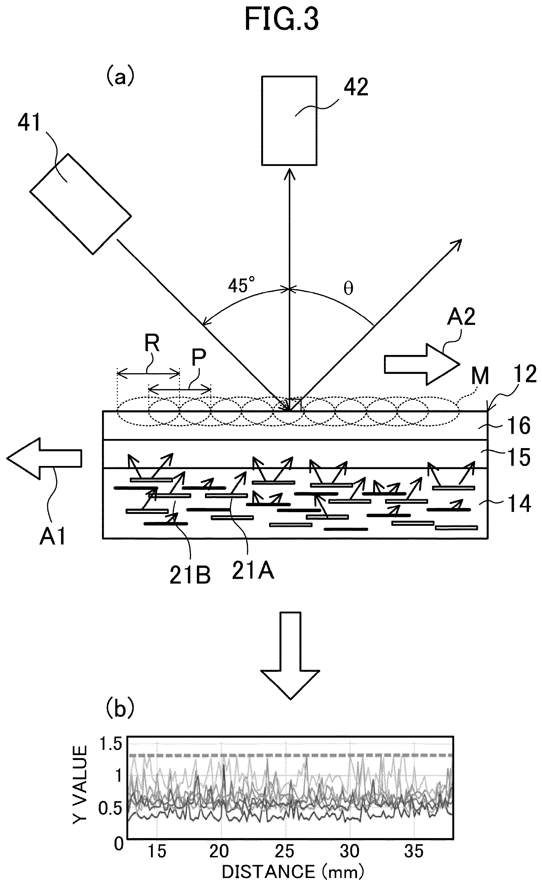

In FIG. 3, (a) illustrates how to measure the graininess index of the multilayer coating film 12. In this specification, "graininess" means a texture such as "glare" or "roughness" which is felt by the intensity of diffused light reflected by the luster material 21 or the like in the multilayer coating film 12. Since the intensity of the diffused light is thought to bring about graininess, assuming that there is a correlation between the magnitude of the variation in the Y value, i.e., the variation in the Y value, and graininess, the standard deviation of the Y value, which is an index representing the variation of the Y value, was used as an index of graininess. For the measurement, a device was used which was based on a micro spectrophotometer VSS7700 manufactured by Nippon Denshoku Industries Co., Ltd. and in which a stage for placing a sample was movable.

The light incident angle of a light source 41 with respect to the multilayer coating film 12 is 45° (an inclination angle with respect to a line perpendicular to the surface of the multilayer coating film 12). The light receiving angle θ (the angle of inclination to a light source side with respect to a specular reflection direction) of a sensor 42 is 0°.

The change in the Y value was measured through measurement in a direction parallel to the surface of the multilayer coating film 12 at a light receiving angle θ of 45° (in a direction perpendicular to the surface of the multilayer coating film 12). Specifically, a sample provided with the multilayer coating film 12 is placed on a stage (not shown), and the Y value is measured for each circular spot region M having a predetermined measurement area. The stage moves in the direction of arrow A1 at a predetermined speed. In this way, the Y value in the spot region M on the surface of the multilayer coating film 12 can be continuously measured in the direction of arrow A2. The Y value of each spot region was measured with a spot diameter R of 0.2 mm, a measurement pitch P of 0.2 mm, and a stage movement speed of 5 mm/min for spot region M. The measurement start point was set to 0 mm, and continuous measurement was performed over a 50 mm measurement distance from the measurement start point toward the A2 direction.

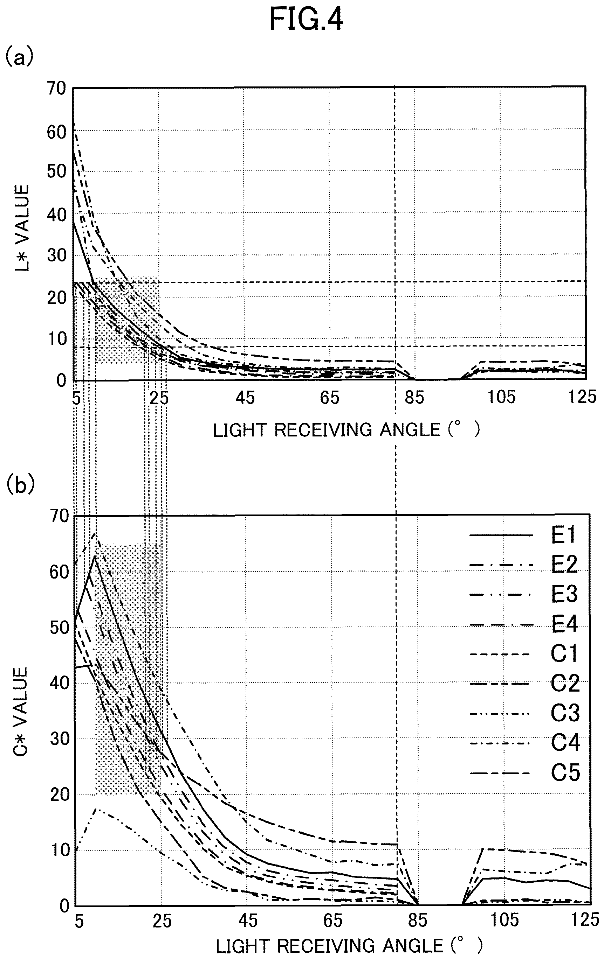

An example measurement result is shown in (b) of FIG. 3. It is considered that the Y value is high in the portion where the luster material 21 is present, and the Y value is low in the portion where the luster material 21 is not present. The standard deviation of Y values at each predetermined measurement distance of 5 mm in the change in Y value was obtained, an average of the standard deviations was determined, and the average was used as the graininess index of the multilayer coating film 12. As indicated by the broken line in (b) of FIG. 4, assuming that the difference in Y value was not perceivable by human vision when the Y value is 1.3 or more, all Y values of 1.3 or more were set to 1.3.

The smaller the value of the graininess index, the finer the texture, the smaller the range of variation, and the more uniform the texture.

In the dark color, the graininess index is preferably from 0.09 to 0.12 inclusive, more preferably from 0.09 to 0.11 inclusive, in view of obtaining a vivid hue with depth while the lightness is low.

When the highlight/shade chroma contrast index and graininess index both satisfy the above numerical ranges in the multilayer coating film with dark color, production of clear vivid red color and rich depth in color can be both achieved more effectively while ensuring low lightness as a whole.

<Optical Properties of Lustrous Layer>

Optical properties of the lustrous layer 14 were examined in the same manner as for the optical properties of the multilayer coating film 12.

Specifically, optical properties were examined for a sample in which only a lustrous layer 14 was provided, via an electrodeposition coating film 13, on a steel plate 11A with no colored layer 15 and transparent clear layer 16 thereon, in the same manner as for the multilayer coating film 12.

In the multilayer coating film 12, a colored layer 15 which reduces light penetrating is stacked on the upper side of the lustrous layer 14. Thus, the lightness $L^*(\theta)$ at highlight ($10° \leq \theta \leq 25°$) in the lustrous layer 14 is preferably higher than the lightness $L^*(\theta)$ at highlight of the multilayer coating film 12.

The chroma $C^*(\theta)$ at highlight ($10° \leq \theta \leq 25°$) in the lustrous layer 14 may be lower than the chroma $C^*(\theta)$ at the highlight in the multilayer coating film 12.

If the lightness $L^*(\theta)$ at the highlight is high (the reflectance is increased), produced color of the coloring agent in the colored layer 15 can be highlighted, and the chroma $C^*(\theta)$ at highlight in the multilayer coating film 12 can be increased.

The chroma $C^*(80°)$ at the shade ($\theta=80°$) in the lustrous layer 14 may be lower than the chroma $C^*(80°)$ at the shade of the multilayer coating film 12.

Specifically, the lustrous layer 14 satisfies the following formulae (4) to (6).

$$11 \leq L^*(\theta) \leq 70 \ (10° \leq \theta \leq 25°) \quad (4)$$

$$6 \leq C^*(\theta) \leq 30 \ (10° \leq \theta \leq 25°) \quad (5)$$

$$0.5 \leq C^*(\theta) \ (\theta=80°) \quad (6)$$

In other words, $L^*(\theta)$ at $10° \leq \theta \leq 25°$, which is highlight, is from 11 to 70 inclusive, preferably from 12 to 68 inclusive. $C^*(\theta)$ at $10° \leq \theta \leq 25°$ is from 6 to 30 inclusive, preferably from 6.5 to 25 inclusive.

$C^*(80°)$ indicating the chroma of shade is 0.5 or more, preferably from 0.6 to 10 inclusive, more preferably from 0.7 to 8 inclusive, particularly preferably from 1 to 8 inclusive.

When the L* value and C* value of the lustrous layer 14 containing a luster material satisfy the formulae (4) to (6), the above numerical ranges of the L* value and C* value in the multilayer coating film 12 are easily achieved.

<Examples>

Examples of this embodiment will be described below.

Coated plates each including a multilayer coating film (a base was an electrodeposition coating film) which includes a colored layer of Production Example 1 shown in Table 1 and a lustrous layer of Examples 1 to 9 (which may be indicated by "E1 to E9" in this specification) and Comparative Examples 1 and 6 (which may be indicated by "C1, C6" in this specification) shown in Table 2 were produced.

[Table 1]

| Paint Composition Table (Colored Layer) | | | Production Example 1 |
|---|---|---|---|
| Perylene Red | | PWC (mass%) | 4.5 |
| | | Average Particle Size (nm) | 20 |
| Inorganic UVA | | PWC (mass%) | 1.2 |
| Resin | Acrylic Resin | Concentration (mass%) | 9.3 |
| | Polyester Resin | Concentration (mass%) | 0.8 |
| | Urethane Resin | Concentration (mass%) | 2.0 |
| | Melamine Resin | Concentration (mass%) | 4.8 |
| Additive | | Concentration (mass%) | 4.2 |
| Solvent | | Concentration (mass%) | 14.4 |
| Water | | Concentration (mass%) | Balance |

[Table 2]

| Paint Composition Table | | | | E1 | E2 | E3 | E4 | C1 | E5 | E6 | E7 | C6 | E8 | E9 |
|---|---|---|---|---|---|---|---|---|---|---|---|---|---|---|
| Colored Layer | | | | Production Example 1 | | | | | | | | | | |
| Lustrous Layer | Pigment | Carbon Black | PWC (mass%) | 5.5 | 8.3 | 12.2 | 18.5 | 23.1 | 8.3 | 12.2 | 18.5 | 23.1 | 5.5 | 5.5 |
| | | | Average Particle Size (nm) | 100 | 60 | 40 | 20 | 5 | 160 | 170 | 190 | 210 | 100 | 100 |
| | | Perylene Red | PWC (mass%) | 4.9 | 4.9 | 4.9 | 4.9 | 4.9 | 4.9 | 4.9 | 4.9 | 4.9 | 1 | 20 |
| | | | Average Particle Size (nm) | 200 | 200 | 200 | 200 | 200 | 200 | 200 | 200 | 200 | 200 | 200 |
| | Luster Material | Aluminum Flake | PWC (mass%) | 4.8 | 4.8 | 4.8 | 4.8 | 4.8 | 4.8 | 4.8 | 4.8 | 4.8 | 4.8 | 4.8 |
| | | Chromium Oxide Flake | PWC (mass%) | 0.2 | 0.2 | 0.2 | 0.2 | 0.2 | 0.2 | 0.2 | 0.2 | 0.2 | 0.2 | 0.2 |
| | Inorganic UVA | | PWC (mass%) | 0.6 | 0.6 | 0.6 | 0.6 | 0.6 | 0.6 | 0.6 | 0.6 | 0.6 | 0.6 | 0.6 |
| | Resin | Acrylic Resin | Concentration (mass%) | 5.1 | 5.1 | 5.1 | 5.1 | 5.1 | 5.1 | 5.1 | 5.1 | 5.1 | 5.1 | 5.1 |
| | | Polyester Resin | Concentration (mass%) | 0.1 | 0.1 | 0.1 | 0.1 | 0.1 | 0.1 | 0.1 | 0.1 | 0.1 | 0.1 | 0.1 |
| | | Urethane Resin | Concentration (mass%) | 4.1 | 4.1 | 4.1 | 4.1 | 4.1 | 4.1 | 4.1 | 4.1 | 4.1 | 4.1 | 4.1 |
| | | Melamine Resin | Concentration (mass%) | 3.9 | 3.9 | 3.9 | 3.9 | 3.9 | 3.9 | 3.9 | 3.9 | 3.9 | 3.9 | 3.9 |
| | Additive | | Concentration (mass%) | 6.0 | 6.0 | 6.0 | 6.0 | 6.0 | 6.0 | 6.0 | 6.0 | 6.0 | 6.0 | 6.0 |
| | Solvent | | Concentration (mass%) | 18.9 | 18.9 | 18.9 | 18.9 | 18.9 | 18.9 | 18.9 | 18.9 | 18.9 | 18.9 | 18.9 |
| | Water | | Concentration (mass%) | Balance | Balance | Balance | Balance | Balance | Balance | Balance | Balance | Balance | Balance | Balance |

[Example 1]

A dull finished steel plate (base plate) treated with zinc phosphate was electrodeposition-coated with a cationic electrodeposition paint so that the cationic electrodeposition paint had a dry film thickness of 20 $\mu$m, which was then baked at 160°C for 30 minutes. The electrodeposition coating film of the coating target obtained was coated with a first base paint (acryl emulsion-based aqueous paint) for a lustrous layer shown in Table 2 by using a rotary spraying type electrostatic coating machine, thereby forming an uncured lustrous layer. The aluminum flakes of the luster material have an average particle size of 15 $\mu$m and an average thickness of 200 nm. The chromium oxide flakes have an average particle size of 10 $\mu$m and an average thickness of 50 nm.

Then the uncured lustrous layer was coated with a second base paint (acryl emulsion-based aqueous paint) for a colored layer shown in Table 1 by using a rotary spraying type electrostatic coating machine, thereby forming an uncured colored layer.

As inorganic UVA shown in Tables 1 and 2, iron oxide nanoparticles (average particle size: 50 nm) were used.

Next, the uncured colored layer was coated with a two-component type urethane clear paint by using a rotary spraying type electrostatic coating machine, thereby forming an uncured transparent clear layer. To the clear paint, benzotriazole-based UVA (CAS No. 70321-86-7 (molecular weight: 447)) was added as an organic UV absorber so as to have a PWC of 5 mass%.

Thereafter, the uncured lustrous layer, the uncured colored layer, and the uncured transparent clear layer were simultaneously heated (at 140°C for 20 minutes) and cured.

The lustrous layer and the colored layer each had a dry thickness of 12 $\mu$m, and the transparent clear layer had a dry thickness of 30 $\mu$m.

The electrodeposition coating film may be coated with the first base paint and the second base paint by the wet-on-wet method, preheated (heated at 80°C for 3 minutes), and then, after clear coating, stoved (heated at 140°C for 20 minutes).

[Examples 2 to 9 and Comparative Examples 1 and 2]

A multilayer coating film was formed in the same manner as in Example 1 except that the first base paint for a lustrous layer shown in Table 2 was used.

[Optical Property Evaluation 1]

Then, as shown in Table 3, the indexes of optical properties were determined by the above-described method. The upper limit value L*($\theta$1) and the lower limit value L*($\theta$2) were set to 23.41 which is L*(10°) of E1 at $\theta$ = 10° and 8.77 which is L*(25°) of E1 at $\theta$ = 25°, respectively. In addition, an observer conducted a visual appearance test by checking each of the multilayer coating films from various angles to evaluate clearness, vividness, and depth of clear vivid red color. The visual appearance test was conducted on a four-point scale indicated by a double circle mark, a circle mark, a triangle mark, and a cross mark. In the evaluation of the clearness, vividness, and depth of the color of red, the double circle mark is the highest score, and the score decreases in a stepwise manner in the order of the circle mark, the triangle mark, and the cross mark.

[Table 3]

| Evaluation | | E1 | E2 | E3 | E4 | C1 | E5 | E6 | E7 | C6 | E8 | E9 |
|---|---|---|---|---|---|---|---|---|---|---|---|---|
| Lustrous Layer | L*(10°) | 66.76 | 63.82 | 58.40 | 54.33 | 50.25 | 53.97 | 49.39 | 45.94 | 34.47 | 67.29 | 56.37 |
| | L*(25°) | 18.26 | 16.05 | 14.68 | 13.49 | 11.49 | 13.58 | 12.41 | 11.41 | 8.54 | 19.16 | 14.09 |
| | C*(10°) | 24.9 | 22.56 | 21.18 | 18.10 | 16.64 | 19.38 | 18.32 | 16.36 | 14.68 | 23.73 | 19.64 |
| | C*(25°) | 10.03 | 8.83 | 8.13 | 7.27 | 6.29 | 7.68 | 6.99 | 6.54 | 5.66 | 9.43 | 7.70 |
| | C*(80°) | 1.53 | 1.31 | 1.22 | 0.75 | 0.63 | 1.17 | 1.10 | 0.67 | 0.57 | 1.42 | 0.99 |
| Multilayer Coating Film | L*(10°) | 23.41 | 22.38 | 20.48 | 19.05 | 17.62 | 18.93 | 17.32 | 16.11 | 12.09 | 22.90 | 19.77 |
| | L*(25°) | 8.77 | 7.71 | 7.05 | 6.48 | 5.52 | 6.52 | 5.96 | 5.48 | 4.10 | 8.24 | 6.77 |
| | C*(10°) | 62.68 | 56.78 | 53.31 | 45.55 | 41.88 | 48.78 | 46.12 | 41.19 | 36.95 | 59.73 | 49.43 |
| | C*(25°) | 31.2 | 27.47 | 25.28 | 22.60 | 19.56 | 23.90 | 21.74 | 20.34 | 17.60 | 29.34 | 23.94 |
| | C*(80°) | 4.56 | 3.89 | 3.65 | 2.23 | 1.88 | 3.50 | 3.29 | 2.01 | 1.69 | 4.23 | 2.94 |
| | $\theta 1$ | 10° | 8.81 | 7.57 | 6.14 | 5.00 | 8.18 | 7.57 | 6.14 | 5.00 | 8.81 | 6.86 |
| | $\theta 2$ | 25° | 23.76 | 22.62 | 21.57 | 20.24 | 23.11 | 22.62 | 21.57 | 20.24 | 23.76 | 22.10 |
| | C*($\theta 1$) | 62.68 | 59.94 | 57.81 | 53.62 | 50.67 | 51.50 | 50.02 | 48.49 | 44.71 | 61.31 | 55.72 |
| | C*($\theta 2$) | 31.2 | 29.23 | 28.59 | 26.34 | 25.70 | 25.43 | 24.59 | 23.71 | 23.13 | 30.22 | 27.47 |
| | k | 0.50 | 0.49 | 0.49 | 0.49 | 0.51 | 0.49 | 0.49 | 0.49 | 0.52 | 0.49 | 0.49 |
| | Highlight/Shade Chroma Contrast Index | 58.1 | 56.1 | 54.2 | 51.4 | 48.8 | 55.0 | 53.3 | 50.5 | 46.4 | 57.09 | 52.78 |
| | Graininess Index | 0.099 | 0.099 | 0.099 | 0.099 | 0.099 | 0.090 | 0.090 | 0.090 | 0.090 | 0.090 | 0.090 |
| | Visual Appearance Test | ◎ | ○ | ○ | ○ | △ | ○ | ○ | ○ | △ | ○ | ○ |

[Optical Property Evaluation 2]

As shown in Table 4, as Comparative Examples 2 to 5 (in this specification, each may be indicated by the reference sign "C2 to C5"), dark-red coating films A to D formed on surfaces of commercially available coated articles were evaluated for the same items as the evaluation items for the multilayer coating films shown in Table 3.

[Table 4]

| | | C2 | C3 | C4 | C5 |
|---|---|---|---|---|---|
| Coating Film | | A | B | C | D |
| Coating Film Evaluation | L*(10°) | 37.11 | 20.89 | 32.33 | 39.3 |
| | L*(25°) | 15.75 | 6.56 | 13.35 | 10.13 |
| | C*(10°) | 43.27 | 17.46 | 66.69 | 40.49 |
| | C*(25°) | 27.6 | 9.43 | 39.1 | 15.1 |
| | C*(80°) | 10.84 | 0.65 | 7.37 | 0.99 |
| | θ1 | 18.3 | 9.56 | 16.3 | 15.8 |
| | θ2 | 35.6 | 21.2 | 31.0 | 26.8 |
| | C*(θ1) | 34.5 | 16.8 | 54.2 | 27.5 |
| | C*(θ2) | 21.0 | 11.9 | 30.9 | 13.3 |
| | k | 0.71 | 0.61 | 0.57 | 0.48 |
| | Highlight/Shade Chroma Contrast Index | 23.6 | 16.1 | 46.8 | 26.5 |
| | Graininess Index | 0.173 | 0.126 | 0.145 | 0.133 |
| | Visual Appearance Test | × | × | △ | × |

[Discussion]

In FIG. 4, (a) and (b) are each a graph showing a relationship between the L* value or the C* value and the light receiving angle θ in the multilayer coating films of E1 to E4 and c1 to C5.

As can be seen from FIG. 4, in E1 to E4, the lightness L* value and the C* value at highlight ($10° \leq \theta \leq 25°$) are within the above numerical ranges shown by dot hatching in FIG. 4.

In addition, how to determine θ1, θ2, C*(θ1), and C*(θ2) of E1 to E4 and C1 when the upper limit value L*(θ1) and the lower limit value L*(θ2) of the L* value in highlight are set to 23.41 and 8.77, respectively, is indicated by dotted lines in FIG. 4.

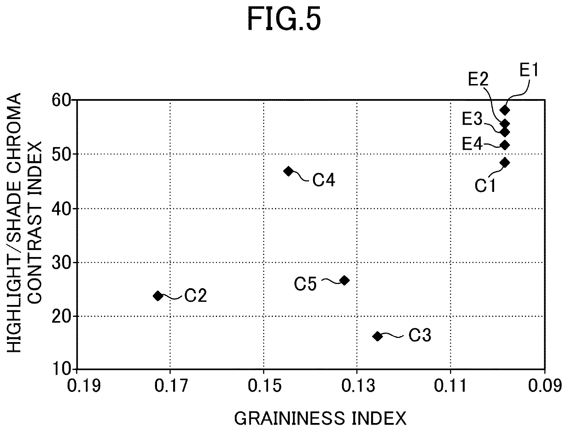

FIG. 5 is a graph showing a relationship between the highlight/shade chroma contrast indexes and the graininess indexes of E1 to E4 and C1 to C5. As can be seen from FIG. 5, in E1 to E4, the highlight/shade chroma contrast index and the graininess index both satisfied the above numerical ranges.

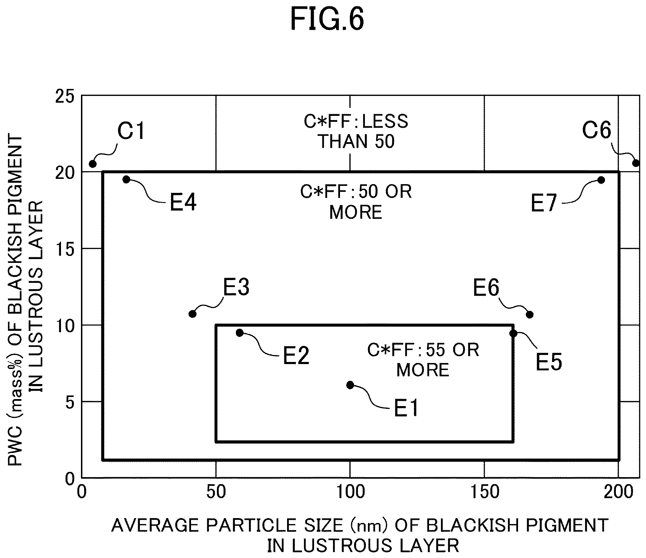

FIG. 6 is a graph showing a relationship between PWC and the average particle size of the blackish pigment (carbon black) in the lustrous layers of E1 to E7, C1, and C6. In E1, E2, and E5, the highlight/shade chroma contrast index C*FF is 55 or more, and in E3, E4, E6, and E7, the highlight/shade chroma contrast index C*FF is 50 or more. It indicates that the multilayer coating film in dark red can achieve both clear vivid red color and rich depth in color while ensuring low lightness as a whole. From FIG. 6, preferable numerical ranges of PWC and the average particle size of blackish pigment in the lustrous layer are found.

Further, it is found that the E8 and E9 also satisfy the above numerical ranges for the evaluation items.

(Second Embodiment)

Now, other embodiments according to the present disclosure will be described in detail. In the description of these embodiments, the same reference characters as those in the first embodiment are used to represent equivalent elements, and the detailed explanation thereof will be omitted.

The second coloring agent contained in the lustrous layer 14 is not limited to the reddish coloring agent, and may be a coloring agent of other hue. In such a case, the coloring agent contained in the colored layer 15 is preferably a coloring agent in a color similar to that of the second coloring agent, as described above.

The multilayer coating film of Example 10 (E10) shown in paint composition table of Table 5 is an example in which phthalocyanine blue, which is a blue pigment, is used as a second coloring agent and a coloring agent.

[Table 5]

| Paint Composition Table | | | | E10 |
|---|---|---|---|---|
| Colored Layer | Pigment | Phthalocyanine Blue | PWC (mass%) | 4.5 |
| | | | Average Particle Size (nm) | 30 |
| | Resin | Acrylic Resin | Concentration (mass%) | 9.3 |
| | | Polyester Resin | Concentration (mass%) | 0.8 |
| | | Urethane Resin | Concentration (mass%) | 2.0 |
| | | Melamine Resin | Concentration (mass%) | 4.8 |
| | Additive | | Concentration (mass%) | 4.2 |
| | Solvent | | Concentration (mass%) | 14.4 |
| | Water | | Concentration (mass%) | Balance |
| Lustrous Layer | Pigment | Carbon Black | PWC (mass%) | 5.5 |
| | | | Average Particle Size (nm) | 100 |
| | | Phthalocyanine Blue | PWC (mass%) | 4.9 |
| | | | Average Particle Size (nm) | 150 |
| | Luster Material | Aluminum Flake | PWC (mass%) | 4.5 |
| | | Chromium Oxide Flake | PWC (mass%) | 0.2 |
| | Resin | Acrylic Resin | Concentration (mass%) | 5.1 |
| | | Polyester Resin | Concentration (mass%) | 0.1 |
| | | Urethane Resin | Concentration (mass%) | 4.1 |
| | | Melamine Resin | Concentration (mass%) | 3.9 |
| | Additive | | Concentration (mass%) | 6.0 |
| | Solvent | | Concentration (mass%) | 18.9 |
| | Water | | Concentration (mass%) | Balance |
| Multilayer Coating Film Evaluation | $L^*(10°)$ | | | 21.43 |
| | $L^*(25°)$ | | | 7.38 |
| | $C^*(10°)$ | | | 55.05 |
| | $C^*(25°)$ | | | 26.38 |
| | $C^*(80°)$ | | | 3.77 |
| | $\theta 1$ | | | 8.19 |
| | $\theta 2$ | | | 23.19 |
| | $C^*(\theta 1)$ | | | 58.88 |
| | $C^*(\theta 2)$ | | | 28.91 |
| | $k$ | | | 0.49 |
| | Highlight/Shade Chroma Contrast Index | | | 55.15 |
| | Graininess Index | | | 0.090 |
| | Visual Appearance Test | | | ○ |

The optical properties of the multilayer coating films of Table 5 also satisfy the requirements for the optical properties of the first embodiment. It indicates that the multilayer coating film in dark blue can achieve both clear vivid red color and rich depth in color while ensuring low lightness as a whole.

DESCRIPTION OF REFERENCE CHARACTERS

| 11 | Vehicle Body |
| 11A | Steel Plate |
| 12 | Multilayer Coating Film |
| 13 | Electrodeposition Coating Film |
| 14 | Lustrous Layer |
| 15 | Colored Layer |
| 16 | Transparent Clear Layer |
| 21 | Luster Material |
| 21A | High-Reflection Flake |
| 21B | Low-Reflection Flake |
| 23 | Blackish Pigment (First Coloring Agent) |
| 24 | Lustrous Layer Reddish Pigment (Second Coloring Agent) |
| 25 | Colored Layer Reddish Pigment (Coloring Agent) |

**Claims**

1. A multilayer coating film comprising:

   a lustrous layer that is formed directly or indirectly on a surface of a coating target and contains a luster material; and a colored layer that is stacked on the lustrous layer, contains a coloring agent, and has translucency, and when a light incident angle is 45°, and a lightness L* value and a chroma C* value of reflected light measured at a light receiving angle $\theta$ are L*($\theta$) and C*($\theta$), respectively, the multilayer coating film satisfying the following formulae (1) to (3):

$$5 \leq L^*(\theta) \leq 25 \ (10° \leq \theta \leq 25°) \quad (1)$$

$$20 \leq C^*(\theta) \leq 65 \ (10° \leq \theta \leq 25°) \quad (2)$$

$$2 \leq C^*(80°) \quad (3)$$

2. The multilayer coating film of claim 1, wherein

   when $\theta$ at which L*($\theta$) ($10° \leq \theta \leq 25°$) of the multilayer coating film is an upper limit value is $\theta1$, and $\theta$ at which L*($\theta$) ($10° \leq \theta \leq 25°$) of the multilayer coating film is a lower limit value is $\theta2$, a coefficient k satisfying C*($\theta1$) = k $\times$ C*($\theta2$) for the multilayer coating film is from 0.03 to 0.5 inclusive.

3. The multilayer coating film of claim 1 or 2, wherein

   when $\theta$ at which L*($\theta$) ($10° \leq \theta \leq 25°$) of the multilayer coating film is an upper limit value is $\theta1$, and a difference $\triangle C^* = C^*(\theta1) - C^*(80°)$ between C*($\theta1$) and C*($80°$) is defined as a highlight/shade chroma contrast index, the highlight/shade chroma contrast index is 50 or higher.

4. The multilayer coating film of claim 1 or 2, wherein
   Y values of the multilayer coating film are obtained by continuous measurement in a direction parallel to a surface of the multilayer coating film at a light receiving angle $\theta$ of 45°, and an average of standard deviations of the Y values calculated for each predetermined measurement distance in change of the Y values is defined as a graininess index of the multilayer coating film, and the graininess index is from 0.09 to 0.12 inclusive.

5. The multilayer coating film of claim 1 or 2, wherein

the lustrous layer satisfies the following formulae (4) to (6):

$$11 \leq L^*(\theta) \leq 70 \ (10° \leq \theta \leq 25°) \quad (4)$$

$$6 \leq C^*(\theta) \leq 30 \ (10° \leq \theta \leq 25°) \quad (5)$$

$$0.5 \leq C^*(80°) \quad (6)$$

6.  The multilayer coating film of claim 1 or 2, wherein

    the lustrous layer contains a first coloring agent and a second coloring agent,
    the first coloring agent is a blackish coloring agent, and
    the second coloring agent is a coloring agent of color other than blackish color.

7.  The multilayer coating film of claim 6, wherein
    a solid content concentration of the first coloring agent in the lustrous layer is from 1 mass% to 20 mass% inclusive.

8.  The multilayer coating film of claim 6, wherein
    a solid content concentration of the second coloring agent in the lustrous layer is from 1 mass% to 20 mass% inclusive.

9.  The multilayer coating film of claim 6, wherein

    the first coloring agent is a blackish pigment, and
    the second coloring agent is a reddish pigment.

10. The multilayer coating film of claim 1 or 2, wherein

    the coloring agent contained in the colored layer is a reddish pigment, and
    a solid content concentration of the reddish pigment in the colored layer is from 1 mass% to 17 mass% inclusive.

11. A coated article comprising the multilayer coating film of claim 1 or 2.

# FIG.1

# FIG.2

# FIG.3

(a)

(b)

# FIG.4

(a)

(b)

# FIG.5

# FIG.6

AVERAGE PARTICLE SIZE (nm) OF BLACKISH PIGMENT
IN LUSTROUS LAYER

## INTERNATIONAL SEARCH REPORT

| International application No. |
|---|
| **PCT/JP2023/039906** |

### A. CLASSIFICATION OF SUBJECT MATTER

***B32B 27/20***(2006.01)i; ***C09D 5/29***(2006.01)i; ***C09D 7/41***(2018.01)i; ***C09D 7/61***(2018.01)i; ***C09D 201/00***(2006.01)i
FI: B32B27/20 A; C09D5/29; C09D7/41; C09D7/61; C09D201/00

According to International Patent Classification (IPC) or to both national classification and IPC

### B. FIELDS SEARCHED

Minimum documentation searched (classification system followed by classification symbols)

B32B27/20; C09D5/29; C09D7/41; C09D7/61; C09D201/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-107438 A (MAZDA MOTOR) 20 June 2016 (2016-06-20)<br>entire text | 1-11 |
| A | WO 2016/088294 A1 (MAZDA MOTOR) 09 June 2016 (2016-06-09)<br>entire text | 1-11 |
| A | WO 2022/102380 A1 (MAZDA MOTOR) 19 May 2022 (2022-05-19)<br>entire text | 1-11 |
| A | WO 2022/102379 A1 (MAZDA MOTOR) 19 May 2022 (2022-05-19)<br>entire text | 1-11 |
| A | WO 2022/102378 A1 (MAZDA MOTOR) 19 May 2022 (2022-05-19)<br>entire text | 1-11 |
| A | JP 2006-281451 A (DAINIPPON INK & CHEM INC) 19 October 2006 (2006-10-19)<br>entire text | 1-11 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2023/039906**

### C. DOCUMENTS CONSIDERED TO BE RELEVANT

| Category* | Citation of document, with indication, where appropriate, of the relevant passages | Relevant to claim No. |
|---|---|---|
| A | WO 2018/061215 A1 (MAZDA MOTOR) 05 April 2018 (2018-04-05)<br>entire text | 1-11 |
| A | JP 2012-232236 A (KANSAI PAINT CO LTD) 29 November 2012 (2012-11-29)<br>entire text | 1-11 |

Form PCT/ISA/210 (second sheet) (July 2022)

EP 4 570 499 A1

**INTERNATIONAL SEARCH REPORT**
Information on patent family members

International application No.

**PCT/JP2023/039906**

| Patent document cited in search report | | | Publication date (day/month/year) | Patent family member(s) | | | Publication date (day/month/year) |
|---|---|---|---|---|---|---|---|
| JP | 2016-107438 | A | 20 June 2016 | JP | 6156343 | B2 | |
| WO | 2016/088294 | A1 | 09 June 2016 | US | 2017/0218206 | A1 | |
| | | | | whole document | | | |
| | | | | DE | 112015004317 | T | |
| | | | | MX | 2017003779 | A | |
| | | | | CN | 109153243 | A | |
| | | | | RU | 2668922 | C | |
| | | | | JP | 2016-107427 | A | |
| WO | 2022/102380 | A1 | 19 May 2022 | EP | 4227087 | A1 | |
| | | | | whole document | | | |
| | | | | CN | 116472124 | A | |
| | | | | JP | 2022-78782 | A | |
| WO | 2022/102379 | A1 | 19 May 2022 | EP | 4227086 | A1 | |
| | | | | whole document | | | |
| | | | | CN | 116438018 | A | |
| | | | | JP | 2022-78781 | A | |
| WO | 2022/102378 | A1 | 19 May 2022 | EP | 4223517 | A1 | |
| | | | | whole document | | | |
| | | | | CN | 116457209 | A | |
| | | | | JP | 2022-78780 | A | |
| JP | 2006-281451 | A | 19 October 2006 | (Family: none) | | | |
| WO | 2018/061215 | A1 | 05 April 2018 | US | 2019/0047270 | A1 | |
| | | | | whole document | | | |
| | | | | EP | 3417949 | A1 | |
| | | | | MX | 2018011549 | A | |
| | | | | CN | 109789438 | A | |
| JP | 2012-232236 | A | 29 November 2012 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006281451 A
- WO 2018061215 A
- JP 2022078780 A
- JP 2012232236 A

**Non-patent literature cited in the description**

- *CHEMICAL ABSTRACTS*, 70321-86-7